# EUROPEAN PATENT APPLICATION

(11) **EP 3 101 584 A1**
(43) Date of publication of application: **07.12.2016**
(21) Application number: 15840842.7
(22) Date of filing: 26.05.2015
(51) Int. Cl.: G06F 21/62

(54) **DATA ACCESS CONTROL METHOD, DEVICE AND TERMINAL**

(30) Priority: 10.09.2014 CN 201410459570
(71) Applicant: Huawei Technologies Co., Ltd, Shenzhen, Guangdong 518129 (CN)
(72) Inventor: ZHAI, Zhengde, Shenzhen Guangdong 518129 (CN); SHEN, Yu, Shenzhen Guangdong 518129 (CN)
(74) Representative: Körber, Martin Hans
(86) International application number: PCT/CN2015/079817
(87) International publication number: WO 2016/037496

(57) **Abstract**

The present invention discloses a data access control method and apparatus, and a terminal, where the method includes: acquiring a request for accessing data on a second application APP by a first application APP, where the data on the second APP includes multiple data items, and each data item in the multiple data items has a respective privacy level; determining a reliability level of the first APP and the privacy level of each data item of the data, on the second APP, to be accessed by the first APP; and determining, for each data item in the multiple data items according to the reliability level of the first APP and the privacy level of each data item, a responding and processing manner of the request for the data on the second APP, where the responding and processing manner includes one or more manners of returning a data item that the first APP requests to access, skipping returning a data item that the first APP requests to access, returning a modified data item, and performing auditing and recording a return result.

## Description

### TECHNICAL FIELD

The present invention relates to the field of data access security management, and in particular, to a data access control method and apparatus, and a terminal.

### BACKGROUND

An intelligent terminal stores a great deal of personal data including an address book, short message service messages, call records, photos, videos, and the like. The personal data constitutes a significant personal information asset of a user. Each type of personal data (for example, the address book) generally includes many data items (such as multiple contacts, multiple short message service messages, and multiple pictures), and all of these data items are protected by a same system permission. System permissions (Permissions) are a resource restriction mechanism provided by an operating system, and only when a corresponding permission is gained, an application (APP) can access specific protected data (for example, an address book) or execute some service functions (for example, accessing a network). If an APP has a corresponding permission, all data items of a type of data are accessed. However, all data items, for example, contacts, on a same APP have different sensitivity levels. In an existing permission control manner, all the data items on the APP, including a data item of a high sensitivity level, are prone to be read by another APP of a low security level, which easily results in disclosure or malicious theft of high-sensitivity data of an end user.

### SUMMARY

In view of this, embodiments of the present invention provide a data access control method and apparatus, and a terminal that effectively prevent a data item of a high sensitivity level on an application from being disclosed or stolen.

A first aspect of the embodiments of the present invention provides a data access control method and apparatus, and a terminal, including: acquiring a request for accessing data on a second application APP by a first application APP, where the data on the second APP includes multiple data items, and each data item in the multiple data items has a respective privacy level; determining a reliability level of the first APP and the privacy level of each data item of the data, to be accessed by the first APP, on the second APP; and determining, for each data item in the multiple data items according to the reliability level of the first APP and the privacy level of each data item, a responding and processing manner of the request for the data on the second APP, where the responding and processing manner includes one or more manners of returning a data item that the first APP requests to access, skipping returning a data item that the first APP requests to access, returning a modified data item, and performing auditing and recording a return result.

With reference to the first aspect, in a first possible implementation manner of the first aspect, the multiple data items of the data on the second APP are classified into one or more data types, and the data type refers to data having a same description object.

With reference to the first aspect or the first possible implementation manner of the first aspect, in a second possible implementation manner of the first aspect, the acquiring a request for accessing data on a second application APP by a first application APP includes: acquiring a request for accessing a same type of data on the second application APP by the first application APP.

With reference to the first aspect or the first or second possible implementation manner of the first aspect, in a third possible implementation manner of the first aspect, the determining a reliability level of the first APP includes: determining the reliability level of the first APP according to a source of the first APP and whether the first APP has a network connection permission.

With reference to the first aspect or any one of the first to third possible implementation manners of the first aspect, in a fourth possible implementation manner of the first aspect, the APP source includes pre-installed system software, an application market (APP Market) trusted by a user, and another source, and reliability levels of the pre-installed system software, the application market (APP Market) trusted by the user, and the another source successively decrease.

With reference to the first aspect or any one of the first to fourth possible implementation manners of the first aspect, in a fifth possible implementation manner of the first aspect, the determining the privacy level of each data item of the data, on the second APP, to be accessed by the first APP includes: manually setting the privacy level of each data item or determining the privacy level according to an association relationship between data on different APPs, where the association relationship includes data items for which data is generated at a same place or at a same time and data items from a same contact.

With reference to the first aspect or any one of the first to fifth possible implementation manners of the first aspect, in a sixth possible implementation manner of the first aspect, the determining, for each data item in the multiple data items according to the reliability level of the first APP and the privacy level of each data item, a responding and processing manner of the request for accessing the data on the second APP by the first APP includes:
when the reliability level of the first APP is higher than or the same as a privacy level of a data item that needs to be accessed by the first APP, the responding and processing manner is returning the data item that the first APP requests to access; or
when the reliability level of the first APP is lower than a privacy level of a data item that needs to be accessed by the first APP, the responding and processing manner is skipping returning the data item that the first APP requests to access, or returning a modified data item, where the modified data item includes false data or confusion data.

With reference to the first aspect or any one of the first to sixth possible implementation manners of the first aspect, in a seventh possible implementation manner of the first aspect, the second APP includes a first address book and a second address book, the first address book or the second address book includes multiple data items, and each data item corresponds to one piece of contact information, where a privacy level of contact information stored in the first address book is higher than a privacy level of contact information stored in the second address book.

With reference to the first aspect or any one of the first to seventh possible implementation manners of the first aspect, in an eighth possible implementation manner of the first aspect, the determining, according to the reliability level of the first APP and the privacy level of each data item, a responding and processing manner of the request for the data on the second APP includes:
determining the reliability level of the first APP, where if the first APP is of a high reliability level, the responding and processing manner is returning the contact information in the first address book or returning all contact information in the first address book and the second address book; or
if the first APP is of a middle or low reliability level, the responding and processing manner is returning only the contact information in the second address book or skipping returning contact information.

A second aspect of the embodiments of the present invention provides an intelligent terminal, including an access control module and a privacy control module, where the access control module is configured to acquire a request for accessing data on a second application APP by a first application APP, where the data on the second APP includes multiple data items, and each data item in the multiple data items has a respective privacy level; the privacy control module is configured to determine a reliability level of the first APP and the privacy level of each data item of the data, on the second APP, to be accessed by the first APP; and the access control module is further configured to determine, for each data item in the multiple data items according to the reliability level of the first APP and the privacy level of each data item, a responding and processing manner of the request for accessing the data on the second APP by the first APP, where the responding and processing manner includes one or more manners of returning a data item that the first APP requests to access, skipping returning a data item that the first APP requests to access, returning a modified data item, and performing auditing and recording a return result.

A third aspect of the embodiments of the present invention provides an intelligent terminal, including a memory and a processor, where the memory stores multiple data items of data on a second APP, a privacy level of each data item in the multiple data items, and a reliability level of the first APP; and the processor acquires a request for accessing the data on the second application APP by the first application APP, and determines, for each data item in the multiple data items according to the reliability level of the first APP and the privacy level of each data item, a responding and processing manner of the request for accessing the data on the second APP by the first APP, where the responding and processing manner includes one or more manners of returning a data item that the first APP requests to access, skipping returning a data item that the first APP requests to access, returning a modified data item, and performing auditing and recording a return result.

In this solution, privacy rating and protection are performed on different data items of personal data, protected by a same permission, on an APP on an intelligent terminal according to respective sensitivity of the different data items to a user, which resolves a problem that some sensitive items of personal data cannot be effectively protected because a granularity based on an existing permission mechanism is excessively rough, thereby effectively preventing a third-party APP from collecting and disclosing the sensitive data, without affecting a normal service function of the APP.

Advantages of the embodiments of the present invention will be partially described in the following specification, where another part is obvious according to the specification, or may be learned by means of implementation of the embodiments of the present invention.

### BRIEF DESCRIPTION OF DRAWINGS

FIG. 1 is a schematic diagram of managing a reliability level of an application APP and a privacy level of a data item according to Embodiment 1 of the present invention;
FIG. 2 is a schematic flowchart of a data access control method according to Embodiment 1 of the present invention;
FIG. 3 is a first schematic diagram of an association relationship between data items according to Embodiment 1 of the present invention;
FIG. 4 is a second schematic diagram of an association relationship between data items according to Embodiment 1 of the present invention;
FIG. 5 is a third schematic diagram of an association relationship between data items according to Embodiment 1 of the present invention;
FIG. 6 is a schematic diagram of modules of an intelligent terminal according to Embodiment 2 of the present invention; and
FIG. 7 is a schematic structural diagram of hardware of an intelligent terminal according to Embodiment 3 of the present invention.

### DESCRIPTION OF EMBODIMENTS

The following descriptions are exemplary implementation manners of embodiments of the present invention. It should be noted that a person of ordinary skill in the art may make several improvements and polishing without departing from the principle of the embodiments of the present invention, and the improvements and polishing shall fall within the protection scope of the embodiments of the present invention.

In a current terminal application, some file types, for example, a picture file, are not protected by an explicit system permission on some systems, but the files are obviously of a same type; in this case, it may be considered that the files are protected by a same special "picture reading" (permissions.picture.read) permission, and all applications (APPs) have this permission by default. Generally, most items (such as most contacts or most photos) of a type of personal data are not particularly sensitive (such as general contacts and general landscape photos), but some data items, for example, records of some special contacts such as a superior, a business partner, a politician, or another public person or friend in an address book, records of short message service messages and phone calls for communicating with the foregoing special sensitive contacts in short message service message records and call records, family photos in photos, and the like, may be quite sensitive.

In most cases, an APP running on a terminal needs to read some information items (such as some contacts, some short message service messages, and some photos) of one type of or several types of personal data on the terminal, so as to perform a normal service function. For example, WeChat needs to read a mobile phone address book of a user to search for a friend for the user, and many social applications need to read some pictures in a user terminal, so as to perform sharing. Currently, an APP on a terminal applies for various access permissions (for example, a permission to read an address book) during installation. If a user wants to use the APP, the user must agree to grant the access permissions applied for by the APP. Once a corresponding permission is obtained, the APP may read all items of one type of or several types of personal data without limitation. For example, once an Android.permission.READ_CONTACTS permission is granted to an APP, the APP can read all contacts in an address book and all call records at will; or once an android.permission.READ_SMS permission is granted to an APP, the APP can read all short message service message records at will; or if an APP obtains a com.android.browser.permission.READ_HISTORY_BOOKMARKS permission, the APP can access and read a browser history. However, an APP generally does not need to read all personal data items. For example, most end users generally do not add a superior or a business partner in address books of the end users as a WeChat friend; many geographic position-based applications support an address book-based geographic position sharing function, but a user generally does not perform position sharing with parents, a superior, and the like in an address books; Taobao needs to read a short message service message from a specified platform to acquire a verification code, with no need to read another short message service message record.

Because an APP runs on a user terminal in a form of compiled code, a user generally has difficulty in learning internal program logic of the APP, such as how the APP processes personal data of the user and whether the APP sends some personal data to a network. According to current research and analysis, there is a common situation in which APPs excessively collect personal data of users. For example, in February 2014, MetaIntell tests the 500 most popular Android APPs and discovers that a disclosure behavior of personal data of users exists in 92% of the programs; in December 2013, HP issues a test report indicating that one user uses 26 APPs on average, where 97% of the programs on average have a privacy problem. These APPs may excessively collect contact records, short message service message records, call records, photos, and the like, especially some sensitive data items, on an intelligent terminal of a user, which constitutes a serious threat to personal privacy of the user.

For a current situation in which system permissions on an intelligent terminal are excessively rough and some particularly sensitive data items in personal information are difficult to protect, privacy rating is performed on different data items of a same type of data, covered and protected by each permission, on the terminal according to respective sensitivity of the different data items to a user, so that each data item has a corresponding privacy sensitivity level to identify sensitivity of the data item. Privacy restriction ensures that only an APP of a high reliability level or degree can read a personal sensitive data item on the terminal; therefore, the user can accurately manage and control access and collection performed by a third-party APP on some user-sensitive data.

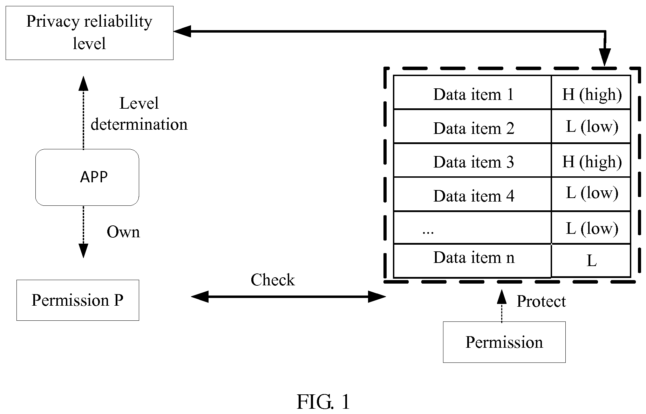

As shown in FIG. 1, each type of personal data of a user is protected by a corresponding permission on an intelligent terminal. According to this solution, privacy rating is performed on different data items of a same type of data, protected by a same permission, on an APP on the intelligent terminal according to respective sensitivity of the different data items to the user, so that all the data items have corresponding privacy sensitivity levels to reflect sensitivity of the data items to the user. Herein, each data item needs to have corresponding privacy level information; however, the information and a corresponding data item may not be directly stored together, and a privacy level may be derived from other information, for example, different storage locations. To reduce management costs of a user, a privacy sensitivity level of a data item may be determined by means of automatic derivation according to a derivation rule provided by a system and may be autonomously adjusted by the user. An APP in the system is rated according to privacy reliability of the APP, the APP is assessed based on a permission owned by the APP and a source of the APP, and a privacy reliability level of the APP is determined. When an APP having a corresponding access permission tries to read a type of personal data, after a default check on the permission by the system is passed, a relationship between a privacy sensitivity level of each data item of the type of personal data and a privacy reliability level of the APP is checked, and visibility and a presentation form, in an application access result set, of a current data item is determined according to the difference relationship between the two levels. A policy that may be used herein may be skipping returning, returning false data, returning confusion data, access auditing, imposing no limitation, or the like, and is referred to as a privacy restriction policy.

### Embodiment 1

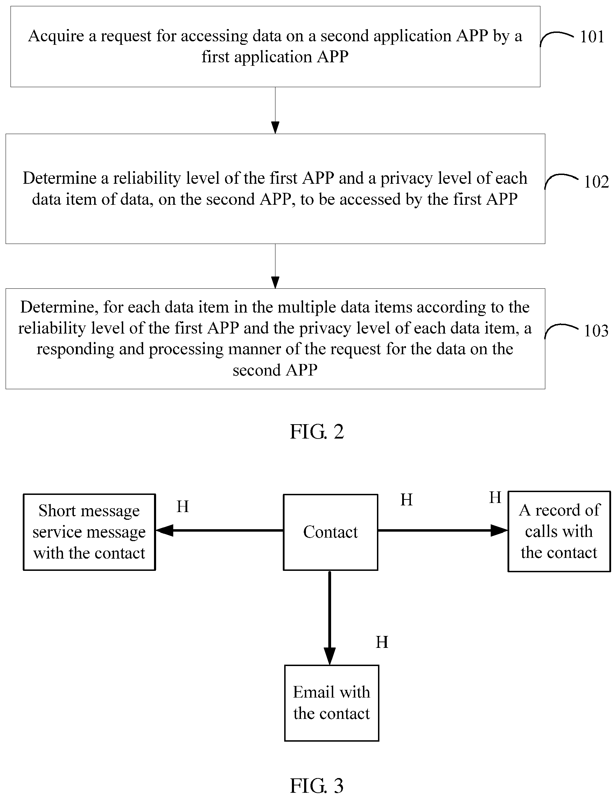

As shown in FIG. 2, this embodiment of the present invention provides a data access control method, where the method includes the following steps:
Step 101: Acquire a request for accessing data on a second application APP by a first application APP, where the data on the second APP includes multiple data items, and each data item in the multiple data items has a respective privacy level.
Step 102: Determine a reliability level of the first APP and the privacy level of each data item of the data, on the second APP, to be accessed by the first APP.
Step 103: Determine, for each data item in the multiple data items according to the reliability level of the first APP and the privacy level of each data item, a responding and processing manner of the request for accessing the data on the second APP by the first APP, where the responding and processing manner includes one or more manners of returning a data item that the first APP requests to access, skipping returning a data item that the first APP requests to access, returning a modified data item, imposing no limitation and directly returning a data item whose privacy level is lower than the reliability level of the first APP, and performing auditing and recording a return result.

In step 101, the first APP includes installed software from various sources, for example, software from system software, an application market (APP Market), or another source. The second APP may be an application, such as a short message service message, an address book, or an album, that has multiple data items. During installation or startup, the first APP generally initiates an access request when needing to call data on another APP.

In some embodiments, the multiple data items of the data on the second APP are classified into one or more data types, where the data type refers to data having a same description object. For example, contacts, short message service messages, call records, and photos are different types of data. The acquiring a request for accessing data on a second application APP by a first application APP includes: acquiring a request for accessing a same type of data on the second application APP by the first application APP.

In step 102, the determining a reliability level of the first APP includes: determining the reliability level of the first APP according to a source of the first APP and whether the first APP has a network connection permission, where the APP source includes pre-installed system software, an application market (APP Market) trusted by a user, and another source, and reliability levels of the pre-installed system software, the application market (APP Market) trusted by the user, and the another source successively decrease. For example, a reliability level of an APP reflects a degree of certainty of a user that the APP will not disclose personal data of the user, and the reliability level may be measured by using an objective standard or may be subjectively specified by the user. In an implementation manner of the present invention, an objective reliability level assessment method is used. According to the method, a reliability level is classified and specified mainly based on a source of an APP and whether the APP has a network connection permission. Such assessment of a privacy reliability level of an APP may be executed on cloud and a result is delivered to a terminal.

Whether an APP has a network connection permission is a significant factor that affects a privacy reliability level of the APP. An APP having no network connection permission cannot disclose user privacy by itself, but if an APP has a network connection permission, the APP has a basic capability of disclosing user privacy. Herein, a set of all APPs is defined as ALL, a set of all APPs having no network connection permission is defined as PLAIN, and a set of all APPs having a network connection permission is defined as NET; obviously, ALL = PLAIN + NET.

A source of an APP reflects a place from which the APP is obtained, that is, a provider of the APP. Generally, an APP provided by a reliable provider is relatively reliable. APPs may be classified into the following types according to sources of the APPs:
(1) Pre-installed system software (defined as SYS), where these APPs are system software that cannot be unloaded and that is pre-installed by equipment manufacturers during delivery, and the software constitutes a part of a terminal system, has explicit software responsibility ascription, and has highest source reliability;
(2) APPs from an APP Market (for example, Google Play) or a website (for example, Baidu.com) trusted by the user, where a set of the APPs is defined as MARKETS herein; and
(3) APPs from another source, which are defined as OTHERS.

For an APP (set as a), a privacy reliability level L(a) of the APP is defined as follows:
(a) L(a) = H (High): When and only when a ∈ PLAIN U SYS, that is, a privacy trust level of system software or software having no network connection permission may be H;
(b) L(a) = M (Normal): When and only when a ∈ MARKETS, that is, a user obtains an APP from a reliable provider, a privacy reliability level of the APP may be M; or
(c) L(a) = L (Low): When and only when a ∈ OTHERS ∩ NET, that is, for an APP beyond the foregoing two conditions, a privacy reliability level of the APP is L.

In step 102, the determining the privacy level of each data item of the data, on the second APP, to be accessed by the first APP includes: manually setting the privacy level of each data item or determining the privacy level according to an association relationship between data on different APPs, where the association relationship includes data items for which data is generated at a same place or at a same time and data items from a same contact.

For example, generally, there is an internal association relationship between different types of personal data items on an intelligent terminal. For example, as shown in FIG. 3, if a call record or a short message service message record is created just by communicating with a contact in an address book, an association relationship exists between the call record or the short message service message record and the contact; if a photo is taken at a geographic position, an association relationship exists between the photo and the geographic position.

In this patent, the association relationship is used to automatically derive privacy sensitivity levels of some data items, which avoids setting privacy sensitivity of all personal data items one by one by a user, thereby reducing management costs of the user. Assuming that a user has specified that a privacy sensitivity level of a contact A is H, a system may naturally obtain, by means of calculation, that a privacy sensitivity level of a short message service message record or a call record created by communicating with A may be automatically set to H, and that an email from or to the contact A may also be automatically marked as H. Certainly, the user has a final right to control a privacy sensitivity level of a personal data item that is automatically derived by the system, and may perform manual adjustment based on a result by means of automatic derivation.

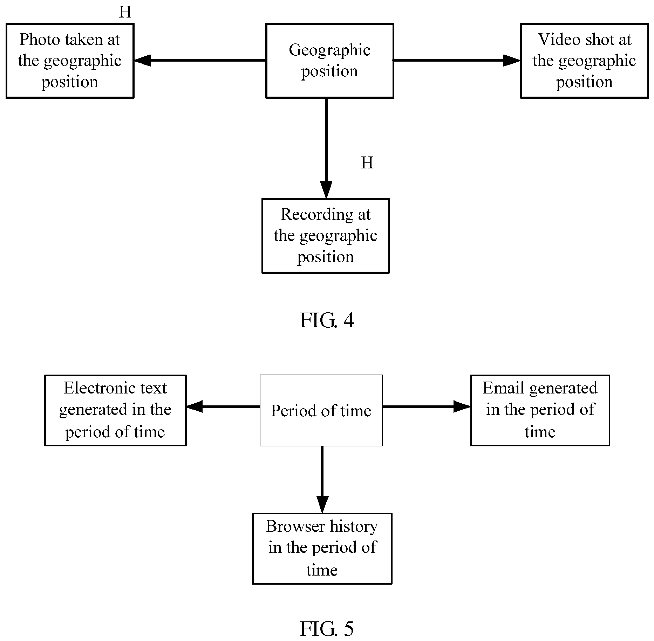

For example, as shown in FIG. 4, a photo, a recording, a recorded video, and the like on an intelligent terminal are generated at a geographic position, and the geographic position defines an external environment in which the digital content is generated and a possible content range. If a geographic position area is sensitive, a photo, a recording, a recorded video, and the like generated at the geographic position are potentially sensitive. Therefore, sensitivity levels of a photo, a recording, a recorded video, and the like that are generated in a position area may be derived from a sensitivity level of the geographic position area.

For a contact in an address book and a geographic position, a user needs to specify corresponding privacy sensitivity levels. Generally, most contacts in an address book and most geographic positions in a terminal system are insensitive, where a default level may be automatically allocated to the contacts and the geographic positions, and the default level is defined in a privacy restriction policy database of the system. A few sensitive contacts or geographic positions may be managed and specified by the user by using a management module. After a user specifies sensitivity levels of contacts in an address book and sensitivity levels of geographic positions (which may be specified by using a map), most personal data items on an intelligent terminal may be automatically derived.

For example, as shown in FIG. 5, another possible association relationship is associated based on time. For example, if a user defines a period of time to be sensitive (for example, participating in a confidential conference), all electronic documents, emails, browser access records, and the like that are generated on a terminal within the period of time are automatically marked privacy-sensitive.

In step 103, the responding and processing manner of the request for the data on the second APP is determined for each data item in the multiple data items according to the reliability level of the first APP and the privacy levels of the multiple data items. Because the responding manner of accessing each data item is determined according to the privacy level of each data item, it can be seen that a privacy control granularity is each data item, and privacy level is determined for the data items one by one instead of the entire data on the APP, thereby improving privacy control fineness for data access. For example, a privacy restriction policy database records representation forms, in a set of return results for accessing data by an APP, of data items according to different-difference relationships between a privacy reliability level of the APP accessing personal data and privacy sensitivity of the data items. A possible result for accessing data is:
(a) skipping returning, where the access result set does not include the data item;
(b) false data, where the access result set includes a false data item, to replace the data item;
(c) confusion data, where the access result set includes the data item, but some fields or content of the data item have undergone confusion processing;
(d) access auditing, where a system audits and records this access; or
(e) imposing no limitation, where the access result set includes the data item.

Different from various traditional access control methods, in this solution, different limitation means are used according to different differences (there may be multiple cases for the differences) between the privacy reliability level of the current APP and the privacy sensitivity levels of the to-be-accessed data items. The different differences reflect sensitivity of the current access behavior, and different control means are needed, which may further avoid excessive limitation and reduce production of redundant information (for example, an audit log). For example, when an APP whose privacy reliability level is L (unreliable) reads a contact record (a senior executive in a major corporation) whose sensitivity level is H (highly sensitive), a system may return a false data item and perform auditing; however, when an APP whose reliability level is M (relatively reliable) reads the same item, the system only needs to return a false item without auditing (even return confusion data). In this patent, different limitation means are used according to different differences between a privacy reliability level of a current APP and privacy sensitivity levels of to-be-accessed data items, so as to help a user further avoid excessive limitation and reduce generation of redundant information (for example, an audit log).

According to this method, if a contact is highly privacy-sensitive, a general APP (for example, WeChat) cannot read such a contact, which is expected by a user in most cases because the user generally does not perform various social connections and sharing with such a contact. If the user really wishes to add the contact as a WeChat friend in an extremely special case, the user needs to manually enter a number of the contact for the addition. In this case, because the APP obtains only a number and cannot obtain any other information (for example, a name) about the contact, privacy of the user is protected to a largest extent in this method.

It can be seen that a responding manner and a result of access are determined according to the reliability level of the first APP and a privacy level of a data item that is on the second APP and that needs to be accessed by the first APP. For example, when the reliability level of the first APP is higher than or the same as the privacy level of the data item that needs to be accessed by the first APP, for example, when the reliability level of the first APP is H, regardless of whether the privacy level of the data item, on the second APP, to be accessed by the first APP is H, M, or L, the responding and processing manner is returning the data item that the first APP requests to access; when the reliability level of the first APP is lower than the privacy level of the data item that needs to be accessed by the first APP, for example, when the reliability level of the first APP is M, and the privacy level of the data item, on the second APP, to be accessed by the first APP is H, the responding and processing manner is skipping returning the data item that the first APP requests to access, or returning a modified data item, where the modified data item includes false data or confusion data. The responding and processing manner may include auditing and recording a return result. For example, it may be set that when a data item whose privacy level is H is accessed, auditing is performed and the access and a return result are recorded.

In some embodiments of the present invention, the second APP includes a first address book and a second address book, the first address book or the second address book includes multiple data items, and each data item corresponds to one piece of contact information, where a privacy level of contact information stored in the first address book is higher than a privacy level of contact information stored in the second address book. For example, some relatively significant contact information is put in the first address book, and some common or insignificant contact information is put in the second address book. The determining, according to the reliability level of the first APP and the privacy level of each data item, a responding and processing manner of the request for the data on the second APP includes:
determining the reliability level of the first APP, where if the first APP is of a high reliability level, the responding and processing manner is returning the contact information in the first address book or returning all contact information in the two address books; or
if the first APP is of a middle or low reliability level, the responding and processing manner is returning only the contact information in the second address book or skipping returning contact information.

In this solution, privacy rating and protection are performed on different data items of personal data on a same APP or a same type of personal data, covered by each permission protecting personal data of a user, on an intelligent terminal according to respective sensitivity of the different data items to the user, which resolves a problem that some sensitive items of the personal data cannot be effectively protected because a granularity based on an existing permission mechanism is excessively rough, thereby effectively preventing a third-party APP from collecting and disclosing the sensitive data, without affecting a normal service function of the APP. In addition, finer manners of managing, controlling, and protecting personal data, relative to a permission management measure of a terminal system, are further provided for the user, and original data storage and presentation modes remain unchanged and original terminal use experience of the user is retained.

### Embodiment 2

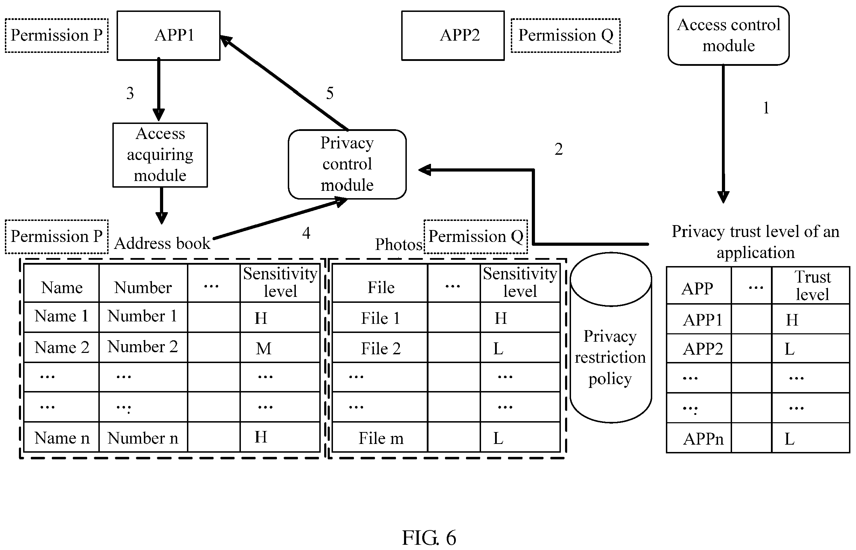

As shown in FIG. 6, another embodiment of the present invention relates to an intelligent terminal, where the intelligent terminal includes an access acquiring module, a privacy control module, and an access control module.

The access acquiring module is configured to acquire a request for accessing data on a second application APP by a first application APP, where the data on the second APP includes multiple data items, and each data item in the multiple data items has a respective privacy level.

The privacy control module is configured to determine a reliability level of the first APP and the privacy level of each data item of the data, on the second APP, to be accessed by the first APP.

The access control module is further configured to determine, for each data item in the multiple data items according to the reliability level of the first APP and the privacy level of each data item, a responding and processing manner of the request for accessing the data on the second APP by the first APP, where the responding and processing manner includes one or more manners of returning a data item that the first APP requests to access, skipping returning a data item that the first APP requests to access, returning a modified data item, and performing auditing and recording a return result.

The privacy control module is configured to determine the reliability level of the first APP according to a source of the first APP and whether the first APP has a network connection permission. The APP source includes pre-installed system software, an application market (APP Market) trusted by a user, and another source, and reliability levels of the pre-installed system software, the application market (APP Market) trusted by the user, and the another source successively decrease.

The privacy control module is configured to: manually set the privacy level of each data item or determine the privacy level according to an association relationship between data on different APPs, where the association relationship includes data items for which data is generated at a same place or at a same time and data items from a same contact.

The access control module is further configured to: when the reliability level of the first APP is higher than or the same as a privacy level of a data item that needs to be accessed by the first APP, the responding and processing manner is returning the data item that the first APP requests to access; or
when the reliability level of the first APP is lower than a privacy level of a data item that needs to be accessed by the first APP, the responding and processing manner is skipping returning the data item that the first APP requests to access, or returning a modified data item, where the modified data item includes false data or confusion data.

The intelligent terminal in this embodiment of the present invention further includes a privacy restriction policy database, an application information level data table (base), and personal data (an address book or photos) carrying a sensitivity level mark. The access control module is a default permission checking module of an operating system on the intelligent terminal, and is configured to check whether an application has a permission for accessing a type of personal data. For a personal data item, herein, H is used to represent a high privacy sensitivity level, M represents a middle sensitivity level, and L represents insensitivity. For an APP, herein, H represents high privacy credibility, M represents middle privacy credibility, and L represents general credibility.

An application trust level table (base) records a privacy reliability level of each APP in a system. How the privacy reliability level of each APP is calculated is described in detail in chapter 2.2.2. The privacy restriction policy database records visibility of data items and privacy restriction of the data items according to different-difference relationships between a privacy reliability level of the APP accessing personal data and privacy sensitivity of the data items. A privacy sensitivity level of the data item (an item in an address book, a photo, or the like) may be automatically derived by performing system rule association in the association manner in Embodiment 1 and be adjusted by a user.

The privacy sensitivity level of the data item may be recorded in a file attribute or in a redundant field of a data table, or a new database may be used in a system to store the information. The figure is an implementation example. A privacy reliability level of an application may be recorded by using a dedicated database or may be dynamically assessed during each time of running. The privacy control module performs privacy protection control according to a privacy trust level of a current APP, a privacy sensitivity level of a to-be-accessed data item, and a system access policy. The user manages a privacy sensitivity level of a personal data item and a privacy reliability level of an APP by using a management module and specifies a privacy restriction policy of the system.

An execution procedure in the system is as follows:
(1) A user first manages privacy sensitivity levels of personal data items, a privacy reliability level of an APP, and a privacy restriction policy of the system by using a management module;
(2) A privacy control module performs initialization, reads privacy trust levels of all applications, and loads a privacy restriction policy of the system;
(3) The APP initiates access to a type of personal data by using a user programming interface (API), and a default access control module of the system intercepts the access request, and checks whether the APP has a permission (a permission P) for accessing the type of personal data, where if the APP does not have the permission, the system refuses the access, or if the APP has the permission, the procedure continues to be performed;
(4) The access control module modifies an execution process of the API or intercepts a data result set returned by the API, compares the sensitivity levels of the data items one by one with the privacy reliability level of the current APP, and processes the data items in the result set according to the privacy restriction policy; and
(5) An API call is returned, and the application acquires the personal data processed by a privacy restriction module.

### Embodiment 3

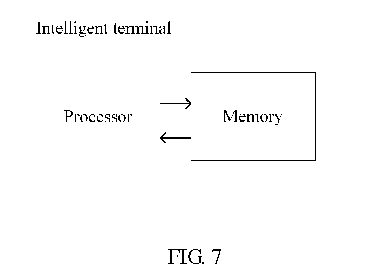

As shown in FIG. 7, an intelligent terminal in still another embodiment of the present invention includes a memory and a processor, where the memory stores multiple data items of data on a second APP, a privacy level of each data item in the multiple data items, and a reliability level of the first APP.

The processor acquires a request for accessing the data on the second application APP by the first application APP, and determines, for each data item in the multiple data items according to the reliability level of the first APP and the privacy level of each data item, a responding and processing manner of the request for accessing the data on the second APP by the first APP, where the responding and processing manner includes one or more manners of returning a data item that the first APP requests to access, skipping returning a data item that the first APP requests to access, returning a modified data item, and performing auditing and recording a return result.

The memory of the intelligent terminal in this embodiment stores data and a related policy used to execute the steps in the method in Embodiment 1, which can implement all the steps of the method in Embodiment 1.

The present invention is described with reference to the flowcharts and/or block diagrams of the method, the apparatus (device), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a function specified in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, a person skilled in the art can make various modifications and variations to the present invention without departing from the spirit and scope of the present invention. The present invention is intended to cover these modifications and variations provided that they fall within the scope of protection defined by the following claims of the present invention and their equivalent technologies.

## Claims

1. A data access control method, comprising:
acquiring a request for accessing data on a second application APP by a first application APP, wherein the data on the second APP comprises multiple data items, and each data item in the multiple data items has a respective privacy level;
determining a reliability level of the first APP and the privacy level of each data item of the data, on the second APP, to be accessed by the first APP; and
determining, for each data item in the multiple data items according to the reliability level of the first APP and the privacy level of each data item, a responding and processing manner of the request for the data on the second APP, wherein the responding and processing manner comprises one or more manners of returning a data item that the first APP requests to access, skipping returning a data item that the first APP requests to access, returning a modified data item, and performing auditing and recording a return result.

2. The data access control method according to claim 1, wherein the multiple data items of the data on the second APP are classified into one or more data types, and the data type refers to data having a same description object.

3. The data access control method according to claim 2, wherein the acquiring a request for accessing data on a second application APP by a first application APP comprises: acquiring a request for accessing a same type of data on the second application APP by the first application APP.

4. The data access control method according to any one of claims 1 to 3, wherein the determining a reliability level of the first APP comprises: determining the reliability level of the first APP according to a source of the first APP and whether the first APP has a network connection permission.

5. The data access control method according to claim 4, wherein the APP source comprises pre-installed system software, an application market (APP Market) trusted by a user, and another source, and reliability levels of the pre-installed system software, the application market (APP Market) trusted by the user, and the another source successively decrease.

6. The data access control method according to any one of claims 1 to 3, wherein the determining the privacy level of each data item of the data, on the second APP, to be accessed by the first APP comprises: manually setting the privacy level of each data item or determining the privacy level according to an association relationship between data on different APPs, wherein the association relationship comprises data items for which data is generated at a same place or at a same time and data items from a same contact.

7. The data access control method according to any one of claims 1 to 3, wherein the determining, for each data item in the multiple data items according to the reliability level of the first APP and the privacy level of each data item, a responding and processing manner of the request for accessing the data on the second APP by the first APP comprises:
when the reliability level of the first APP is higher than or the same as a privacy level of a data item that needs to be accessed by the first APP, the responding and processing manner is returning the data item that the first APP requests to access; or
when the reliability level of the first APP is lower than a privacy level of a data item that needs to be accessed by the first APP, the responding and processing manner is skipping returning the data item that the first APP requests to access, or returning a modified data item, wherein the modified data item comprises false data or confusion data.

8. The data access control method according to any one of claims 1 to 3, wherein the second APP comprises a first address book and a second address book, the first address book or the second address book comprises multiple data items, and each data item corresponds to one piece of contact information, wherein a privacy level of contact information stored in the first address book is higher than a privacy level of contact information stored in the second address book.

9. The data access control method according to claim 8, wherein the determining, according to the reliability level of the first APP and the privacy level of each data item, a responding and processing manner of the request for the data on the second APP comprises:
determining the reliability level of the first APP, wherein if the first APP is of a high reliability level, the responding and processing manner is returning the contact information in the first address book or returning all contact information in the first address book and the second address book; or
if the first APP is of a middle or low reliability level, the responding and processing manner is returning only the contact information in the second address book or skipping returning contact information.

10. An intelligent terminal, comprising an access acquiring module, a privacy control module, and an access control module, wherein
the access acquiring module is configured to acquire a request for accessing data on a second application APP by a first application APP, wherein the data on the second APP comprises multiple data items, and each data item in the multiple data items has a respective privacy level;
the privacy control module is configured to determine a reliability level of the first APP and the privacy level of each data item of the data, on the second APP, to be accessed by the first APP; and
the access control module is configured to determine, for each data item in the multiple data items according to the reliability level of the first APP and the privacy level of each data item, a responding and processing manner of the request for accessing the data on the second APP by the first APP, wherein the responding and processing manner comprises one or more manners of returning a data item that the first APP requests to access, skipping returning a data item that the first APP requests to access, returning a modified data item, and performing auditing and recording a return result.

11. The intelligent terminal according to claim 10, wherein the multiple data items of the data on the second APP are classified into one or more data types, and the data type refers to data having a same description object.

12. The intelligent terminal according to claim 11, wherein the access acquiring module is specifically configured to acquire a request for accessing a same type of data on the second application APP by the first application APP.

13. The intelligent terminal according to any one of claims 10 to 12, wherein the privacy control module is configured to determine the reliability level of the first APP according to a source of the first APP and whether the first APP has a network connection permission.

14. The intelligent terminal according to claim 13, wherein the APP source comprises pre-installed system software, an application market (APP Market) trusted by a user, and another source, and reliability levels of the pre-installed system software, the application market (APP Market) trusted by the user, and the another source successively decrease.

15. The intelligent terminal according to any one of claims 10 to 12, wherein the privacy control module is configured to: manually set the privacy level of each data item or determine the privacy level according to an association relationship between data on different APPs, wherein the association relationship comprises data items for which data is generated at a same place or at a same time and data items from a same contact.

16. The intelligent terminal according to any one of claims 10 to 12, wherein the access control module is specifically configured to:
when the reliability level of the first APP is higher than or the same as a privacy level of a data item that needs to be accessed by the first APP, the responding and processing manner is returning the data item that the first APP requests to access; or
when the reliability level of the first APP is lower than a privacy level of a data item that needs to be accessed by the first APP, the responding and processing manner is skipping returning the data item that the first APP requests to access, or returning a modified data item, wherein the modified data item comprises false data or confusion data.

17. The data access control method according to any one of claims 10 to 12, wherein the second APP comprises a first address book and a second address book, the first address book or the second address book comprises multiple data items, and each data item corresponds to one piece of contact information, wherein a privacy level of contact information stored in the first address book is higher than a privacy level of contact information stored in the second address book.

18. The data access control method according to claim 17, wherein the access control module is further configured to determine the reliability level of the first APP, wherein if the first APP is of a high reliability level, the responding and processing manner is returning the contact information in the first address book or returning all contact information in the two address books; or
if the first APP is of a middle or low reliability level, the responding and processing manner is returning only the contact information in the second address book or skipping returning contact information.

19. An intelligent terminal, comprising a memory and a processor, wherein the memory stores multiple data items of data on a second APP, a privacy level of each data item in the multiple data items, and a reliability level of the first APP; and
the processor is configured to: acquire a request for accessing the data on the second application APP by the first application APP, and determine, for each data item in the multiple data items according to the reliability level of the first APP and the privacy level of each data item, a responding and processing manner of the request for accessing the data on the second APP by the first APP, wherein the responding and processing manner comprises one or more manners of returning a data item that the first APP requests to access, skipping returning a data item that the first APP requests to access, returning a modified data item, and performing auditing and recording a return result.

20. The intelligent terminal according to claim 19, wherein the reliability level of the first APP that is stored in the memory may be determined according to a source of the first APP and whether the first APP has a network connection permission.

21. The intelligent terminal according to claim 20, wherein the APP source comprises pre-installed system software, an application market (APP Market) trusted by a user, and another source, and reliability levels of the pre-installed system software, the application market (APP Market) trusted by the user, and the another source successively decrease.

22. The intelligent terminal according to claim 19, wherein the privacy level of each data item of the data on the second APP that is stored in the memory is manually set or is determined according to an association relationship between data on different APPs, wherein the association relationship comprises data items for which data is generated at a same place or at a same time and data items from a same contact.

23. The intelligent terminal according to any one of claims 19 to 22, wherein the processor is configured to acquire the request for accessing the data on the second application APP by the first application APP, wherein when the reliability level of the first APP is higher than or the same as a privacy level of a data item that needs to be accessed by the first APP, the responding and processing manner of the request for accessing the data on the second application APP by the first application APP is returning the data item that the first APP requests to access; or
when the reliability level of the first APP is lower than a privacy level of a data item that needs to be accessed by the first APP, the responding and processing manner of the request for accessing the data on the second application APP by the first application APP is skipping returning the data item that the first APP requests to access, or returning a modified data item, wherein the modified data item comprises false data or confusion data.
